# EUROPÄISCHE PATENTSCHRIFT

(11) **EP 0 681 752 B1**
(45) Veröffentlichungstag und Bekanntmachung des Hinweises auf die Patenterteilung: **16.10.1996**
(21) Anmeldenummer: 94904985.2
(22) Anmeldetag: 27.01.1994
(51) Int. Cl.: H02G 11/00, F16G 13/10, F16G 13/16

(54) **KABELFÜHRUNG**
CABLE GUIDE
GUIDE-CABLE

(30) Priorität: 01.02.1993 DE 4302757
(43) Veröffentlichungstag der Anmeldung: 15.11.1995
(73) Patentinhaber: IGUS SPRITZGUSSTEILE FÜR DIE INDUSTRIE GmbH, D-51147 Köln (DE)
(72) Erfinder: BLASE, Günter, D-51429 Bergisch Gladbach (DE)
(74) Vertreter: Stachow, E.-W., Prof. Dr.
(86) Internationale Anmeldenummer: DE9400085
(87) Internationale Veröffentlichungsnummer: WO9418735

(56) Entgegenhaltungen:
- DE-A- 2 220 044
- DE-C- 3 930 291

## Beschreibung

Die Erfindung betrifft eine Kabelführung aus gelenkig miteinander verbundenen, stirnseitig offenen Einzelelementen aus elastomerem Kunststoff, bei welcher die Gelenkachsen der Gelenke quer zur Längsachse der Kabelführung verlaufen und die einzelnen Elemente zumindest abschnittsweise so miteinander verbunden sind, daß die Gelenkachsen zweier benachbarter Elemente um 90 ° zueinander versetzt angeordnet sind.

Eine solche Kette ist z.B. aus der DE-OS 2 220 044 bekannt.

Derartige Kabelführungen besitzen bezüglich der Drehung mehrerer zueinander benachbarter Elemente zwei Freiheitsgrade und sind somit über große Abschnitte in mehrere Richtungen abwinkelbar. Sie dienen zum Schutz von Kabeln vor Zugbeanspruchung, übermäßiger Biegebeanspruchung sowie vor sonstigen äußeren Einflüssen. Diese im Stand der Technik bekannten Kabelführungen sind in den Abschnitten, in welchen sie zwei Drehfreiheitsgrade aufweisen, aus untereinander gleichen Elementen zusammengesetzt, wobei jedes zweite Element 90 ° um die Längsachse der Kabelführung verdreht angeordnet ist. Die Elemente können einen im wesentlichen rechteckigen Querschnitt aufweisen, wobei die Abwinkelbarkeit der Elemente zueinander begrenzt ist, um die innenliegenden Kabel vor übermäßiger Biegebeanspruchung zu schützen. Durch die gelenkig miteinander verbundenen Elemente wird ein Kabelkanal gebildet, in dem die Kabel nur durch die stirnseitig angeordneten Eintritts- und Austrittsöffnungen entlang der Längsachse der Kabelführung hineingeschoben werden können. Bei längeren Kabelführungen erweist sich das Einführen der Kabel oft als sehr mühselig, insbesondere wenn die Kabelführung mehrfach und in verschiedene Richtungen abgewinkelt ist und mehrere Kabel aufnehmen soll.

Bei Kabelführungen oder sogenannten Energieführungsketten, die, wie z. B. die in der DE-PS 39 30 291 beschriebenen, einen Freiheitsgrad aufweisen, ist schon länger bekannt, diese mit lösbaren Deckeln auszustatten, wobei dann die Kabel bequem von einer Seite in die Kabelführung eingelegt werden können. Bei Kabelführungen der eingangs genannten Art stößt dies jedoch auf erhebliche Schwierigkeiten, da die Einzelelemente jeweils verdreht zueinander angeordnet sind.

Es ist daher die Aufgabe der vorliegenden Erfindung, eine Kabelführung der eingangs genannten Art so weiterzubilden, daß die Kabel bequem in diese einlegbar sind.

Die Aufgabe wird dadurch gelöst, daß in dem betreffenden Abschnitt zwei verschiedene, sich abwechselnde Grundformen von Elementen vorgesehen sind, die jeweils einen zu öffnenden Wandungsteil aufweisen, der sich über die gesamte Länge des betreffenden Elementes erstreckt und so angeordnet ist, daß bei benachbarten Elementen mit zueinander versetzt angeordneten Gelenkachsen die zu öffnenden Wandungsteile auf der gleichen Seite der Kabelführung angeordnet sind, wobei jedes Element zur gelenkigen Verbindung mit je zwei benachbarten Elementen gegenüberliegende Löcher und zu diesen passende gegenüberliegende Zapfen aufweist und jeweils ein Element einen mit einem Loch versehenen Deckel, der den zu öffnenden Wandungsteil dieses Elementes bildet, und das benachbarte Element einen mit einem Zapfen versehenen Deckel aufweist, der den zu öffnenden Wandungsteil dieses Elementes bildet.

Dadurch ergibt sich in vorteilhafter Weise eine Kabelführung mit zwei Freiheitsgraden, bei welcher alle zu öffnenden Wandungsteile auf einer Seite der Kabelführung angeordnet sind. Die Wandungsteile erstrecken sich dabei über die gesamte Länge des betreffenden Elementes, so daß, wenn diese geöffnet werden, die Kabelführung entlang ihrer Längsachse auf einer Seite eine durchgängige Öffnung aufweist. Die Wandungsteile lassen sich bequem, beginnend von einem Ende der Kabelführung, nacheinander öffnen, so daß die Kabel ohne Mühe eingelegt werden können. Zur gelenkigen Verbindung eines einzelnen Elementes mit je zwei benachbarten Elementen weisen diese gegenüberliegende Löcher und zu diesen passende gegenüberliegende Zapfen auf und jeweils ein Element weist einen mit einem Loch versehenen Deckel und das benachbarte Element einen mit einem Zapfen versehenen Deckel auf. Die Löcher und Zapfen stellen die jeweiligen Gelenkachsen dar. Das heißt, daß zumindest bei einigen Elementen die Löcher gegenüber den Zapfen um 90° versetzt angeordnet sind.

Vorzugsweise sind die Elemente bis auf ihre Stirnseiten einschließlich der zu öffnenden Wandungsteile im wesentlichen geschlossen ausgebildet und überlappen sich teilweise. Da sich die Elemente teilweise überlappen, wird ein nahezu geschlossener Kabelkanal gebildet.

Vorzugsweise sind die zu öffnenden Wandungsteile als abnehmbarer und aufschnappbarer Deckel ausgebildet. Es ist jedoch auch möglich, die Deckel nur einseitig aufklappbar zu gestalten, so daß diese beim Öffnen der Kabelführung nicht verlorengehen können. Dafür kann z. B. an einer Seite der Deckel ein Scharnier vorgesehen sein.

Zweckmäßigerweise ist die Verbindung der Deckel mit den Elementen als Nut- und Federverbindung ausgebildet. Die Deckel können dazu auf ihren auf dem Grundkörper der Elemente aufliegenden Seiten jeweils mit einer langgestreckten Nut versehen sein, welche mit entsprechenden Federn der Elemente zusammenwirken.

Die Nut- und Federverbindung kann formschlüssig rastend ausgebildet sein, um einen festen Sitz der Deckel zu gewährleisten.

Die Erfindung umfaßt auch, daß die Kabelführung auch abschnittsweise gleichartig gestaltete Elemente aufweisen kann, welche nur einen Drehfreiheitsgrad aufweisen, so daß sich die Kabelführung abschnittsweise nur in einer Ebene und abschnittsweise in zwei Ebenen abwinkeln läßt. Die untereinander gleichartig gestalteten Elemente weisen dann ebenfalls abnehmbare und aufschnappbare Deckel auf, die auf der gleichen Seite der Kabelführung angeordnet sind wie die Deckel der Abschnitte, die zwei Drehfreiheitsgrade aufweisen.

Ein bevorzugtes Ausführungsbeispiel der Erfindung wird im folgenden anhand der Zeichnung näher beschrieben.

In der Zeichnung zeigen:

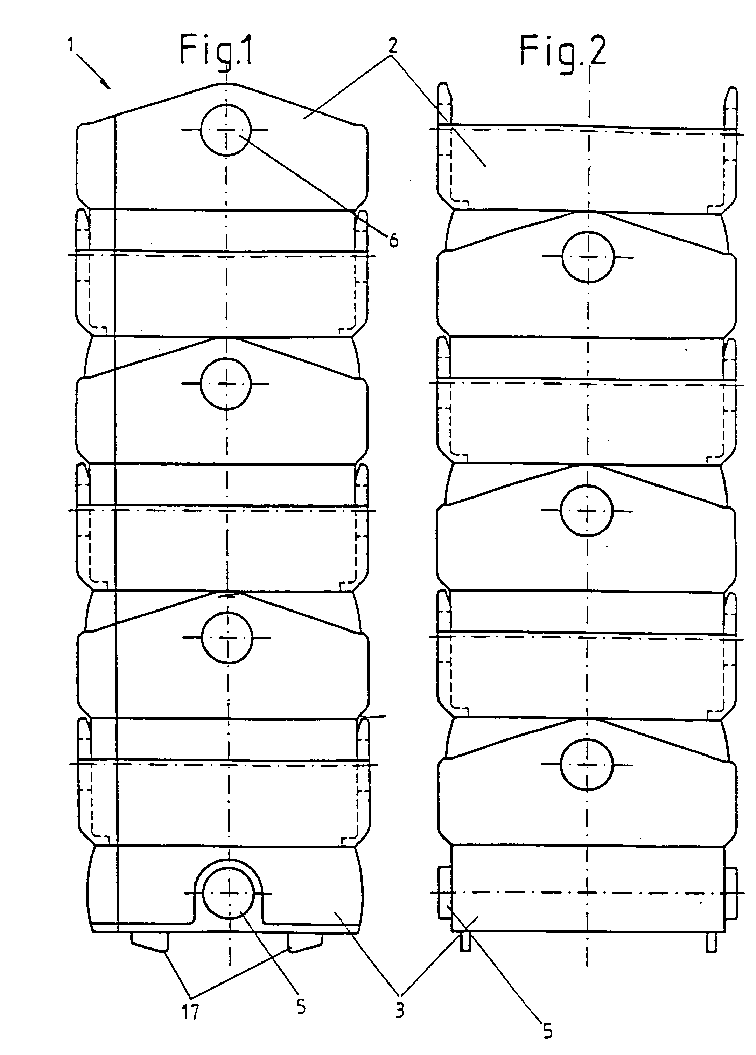

- Figur 1: einen Abschnitt der erfindungsgemäßen Kabelführung, bestehend aus sechs Einzelelementen,
- Figur 2: den Abschnitt der Kabelführung aus Figur 1, der um 90 ° gedreht ist,
- Figur 3: die Vorderansicht eines Einzelelementes, welches einen mit Zapfen versehenen Deckel aufweist,
- Figur 4: eine Seitenansicht des Elementes aus Figur 3,
- Figur 5: eine Vorderansicht eines Elementes, welches einen mit Loch versehenen Deckel aufweist,
- Figur 6: eine Seitenansicht des Elementes aus Figur 5,
- Figur 7: eine Vorderansicht eines Elementes, welches zur gelenkigen Verbindung mit einem zu diesem Element gleichartigen Element vorgesehen ist,
- Figur 8: eine Seitenansicht des Elementes aus Figur 7,
- Figur 9: einen Abschnitt der Kabelführung, bestehend aus mehreren untereinander gleichartigen Elementen und
- Figur 10: den Abschnitt der Kabelführung aus Figur 9, der um 90 ° gedreht ist.

Wie aus den Zeichnungen zu ersehen ist, besteht die erfindungsgemäße Kabelführung 1 aus einer Vielzahl von rechteckigen bzw. quadratischen Einzelelementen 2, 3, die gelenkig miteinander verbindbar sind. Jedes Einzelelement 2, 3 umschließt einen zur Aufnahme von Kabeln vorgesehenen Hohlraum 4. Die Elemente 2, 3 weisen auf ihren Außenflächen jeweils zwei Zapfen 5 und zwei Löcher 6 auf, wobei die Löcher 6 eine Gelenkachse 8 und die Zapfen 5 eine zweite Gelenkachse 7 definieren. Die Löcher 6 und die Zapfen 5 sind jeweils auf gegenüberliegenden Seitenflächen der Elemente 2, 3 angeordnet, so daß die beiden Gelenkachsen 7, 8 senkrecht zueinander und senkrecht zu der Längsachse der Kabelführung angeordnet sind. Die Löcher 6 sind passend zu den Zapfen 5 ausgebildet, so daß die einzelnen Elemente 2, 3, die vorzugsweise aus thermoplastischem Material bestehen, zu einem weitestgehend geschlossenen Kabelkanal zusammensteckbar sind. Die Elemente 2, 3 sind entsprechend der Anordnung der Löcher 6 und Zapfen 5 nur so zusammensteckbar, daß die Gelenkachsen zweier benachbarter Elemente 2, 3 um 90 ° zueinander versetzt angeordnet sind, so daß die Kabelführung 1 zwei Drehfreiheitsgrade aufweist.

Jedes Element 2, 3 weist einen Bereich größerer Außenkantenlänge 9 und einen Bereich geringerer Außenkantenlänge 10 auf, wobei in dem Bereich größerer Außenkantenlänge 9 die Löcher 6 und in dem Bereich geringerer Außenkantenlänge 10 die Zapfen 5 angeordnet sind. Wenn die Einzelelemente 2, 3 zu einem Strang zusammengesetzt sind, umschließen die Bereiche größerer Außenkantenlänge 9 jeweils den Bereich geringerer Außenkantenlänge 10 des benachbarten Elementes 2, 3, wobei jeweils die Zapfen 5 eines Elementes 2, 3 in die Löcher 6 des benachbarten Elementes 2, 3 eingreifen. Damit die sich gegenseitig umschließenden und überlappenden Bereiche benachbarter Elemente 2, 3 in jeder Abwinkelungsstellung der Elemente 2, 3 zueinander dicht aufeinander liegen, besitzen die sich in etwa parallel zu der durch die Zapfen 5 definierten Gelenkachse 7 erstreckenden Außenflächen der Elemente im Bereich der geringeren Außenkantenlänge 10 eine Konvexe Form.

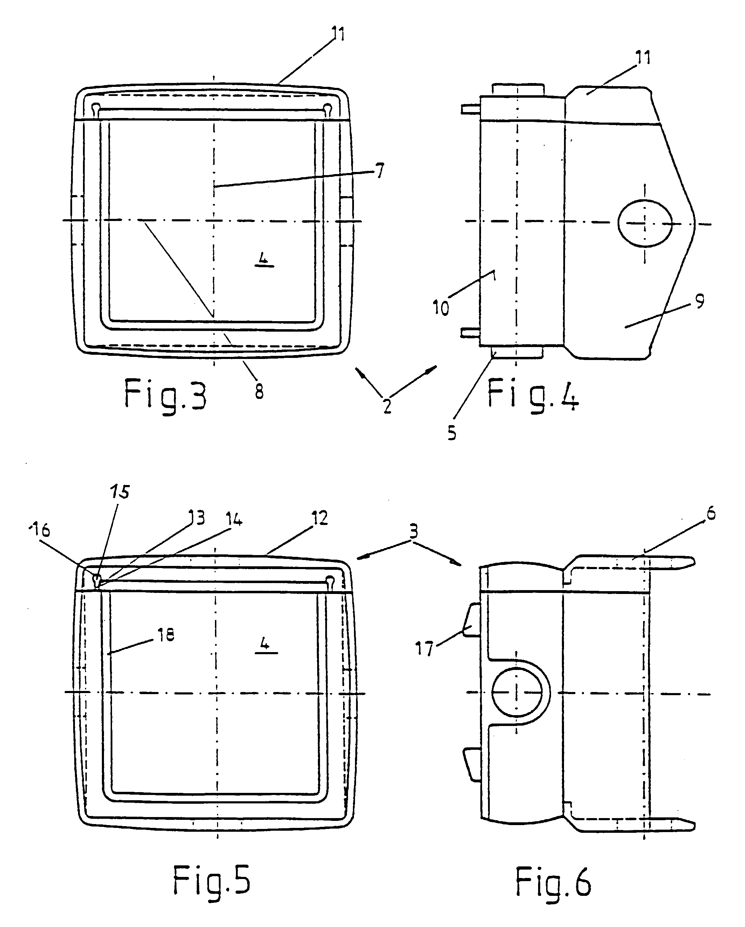

Es sind zwei unterschiedliche Grundformen von Elementen 2, 3 vorgesehen. Das in den Figuren 3 und 4 gezeigte Element 2 weist einen mit einem Zapfen 5 versehenen abnehmbaren und aufschnappbaren Deckel 11 auf. Das in den Figuren 5 und 6 gezeigte Element 3 ist ebenfalls mit einem abnehmbaren und aufschnappbaren Deckel 12 versehen. Der Deckel 12 dieses Elementes 3 besitzt jedoch ein Loch 6. Das heißt, der Deckel 11 des Elementes 2 ist auf der Seite eines Zapfens 5 angeordnet und der Deckel 12 des Elementes 3 ist auf der Seite eines zu dem Zapfen 5 passenden Loches 6 angeordnet. Werden die zwei unterschiedlichen Grundformen von Elementen 2, 3 abwechselnd ineinandergesteckt, sind alle Deckel 11, 12 zu einer Seite der Kabelführung 1 ausgerichtet, so daß sich die Kabelführung 1 durch Abnehmen der Deckel 11, 12 einseitig öffnen läßt, um die Kabel einzulegen. Dabei überlappen sich die Deckel 11, 12 benachbarter Elemente 2, 3, so daß diese sich beginnend an einer Seite der Kabelführung 1 nacheinander abnehmen lassen und in umgekehrter Reihenfolge wieder aufschnappen lassen. Dabei ist auch denkbar, die Passung zwischen den Löchern 6 und den Zapfen 5 so zu wählen, daß sich alle Deckel 11, 12 in einem zusammenhängenden Strang abreißen lassen. Die Deckel 11, 12 sind auf ihren auf dem Grundkörper der Elemente 2, 3 aufliegenden Seiten jeweils mit einer Nut 13 versehen, welche mit entsprechenden Federn 14 der Elemente 2, 3 zusammenwirken. Die Federn 14 besitzen an ihrem äußersten Ende eine wulstförmige Verdickung 15, welche in eine entsprechende Auskehlung 16 der Nuten 13 einschnappt.

In dem Bereich geringerer Außenkantenlängen 10 besitzen die Elemente 2, 3 an der Stirnseite Anschlagnasen 17, die beim Verschwenken der Elemente 2, 3 zueinander an einen Anschlag 18 des jeweils benachbarten Elementes 2, 3 stoßen. Dadurch lassen sich die Elemente 2, 3 nur begrenzt gegeneinander abwinkeln, so daß die in der Kabelführung 1 angeordneten Kabel nicht übermäßig auf Biegung beansprucht werden können.

Die Zapfen 5 schließen in etwa bündig mit der Außenkontur der Elemente 2 bzw. dem oberen Rand der Löcher 6 ab.

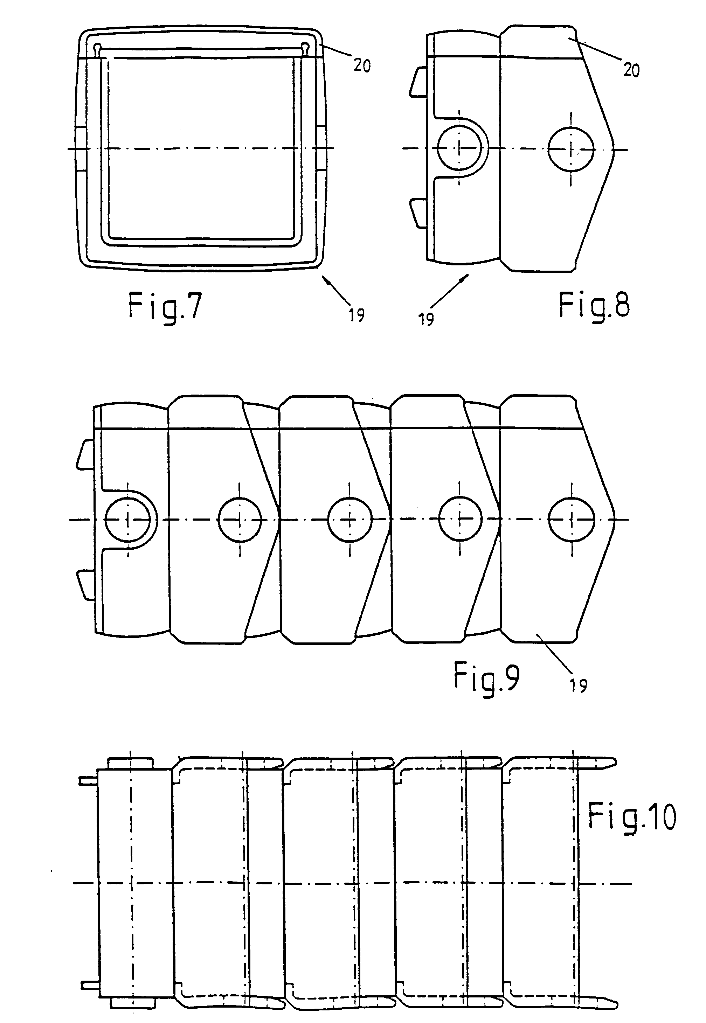

Neben den bereits eingehend beschriebenen verschiedenen Grundformen von Elementen 2, 3 ist es denkbar, eine Kabelführung teilweise auch aus solchen Elementen 19 zusammenzusetzen, die zueinander nur einen Drehfreiheitsgrad aufweisen. Dadurch läßt sich die Kabelführung 1 abschnittsweise nur in einer Ebene und abschnittsweise in zwei Ebenen verschwenken. Ein Abschnitt der Kabelführung 1, der aus solchen Elementen 19 zusammengesetzt ist, die zueinander nur einen Drehfreiheitsgrad aufweisen, ist beispielsweise in den Figuren 7 bis 10 veranschaulicht. Wie aus der Figur 8 zu ersehen ist, weist das dort gezeigte Element 19 jeweils auf einer Seite ein Loch 6 und einen Zapfen 5 auf. Der Deckel 20 des Elementes 19 erstreckt sich in etwa parallel zu den durch die Löcher 6 und Zapfen 5 definierten Gelenkachsen.

### Bezugszeichenliste

- 1: Kabelführung
- 2, 3,19: Elemente
- 4: Hohlraum
- 5: Zapfen
- 6: Löcher
- 7, 8: Gelenkachsen
- 9: Bereich größerer Außenkantenlänge
- 10: Bereich geringerer Außenkantenlänge
- 11, 12,20: Deckel
- 13: Nut
- 14: Feder
- 15: Verdickung
- 16: Auskehlung
- 17: Anschlagnase
- 18: Anschlag

## Patentansprüche

1. Kabelführung aus gelenkig miteinander verbundenen, stirnseitig offenen Einzelelementen (2, 3) aus elastomerem Kunststoff, bei welcher die Gelenkachsen (7, 8) der Elemente (2, 3) quer zur Längsachse der Kabelführung (1) verlaufen und die einzelnen Elemente zumindest abschnittsweise so miteinander verbunden sind, daß die Gelenkachsen (7, 8) zweier benachbarter Elemente (2, 3) um 90° zueinander versetzt angeordnet sind, **dadurch gekennzeichnet**, daß in dem betreffenden Abschnitt zwei verschiedene sich abwechselnde Grundformen von Elementen (2, 3) vorgesehen sind, die jeweils einen zu öffnenden Wandungsteil aufweisen, der sich über die gesamte Länge des betreffenden Elementes erstreckt und so angeordnet ist, daß bei benachbarten Elementen (2, 3) mit zueinander versetzt angeordneten Gelenkachsen (7, 8) die zu öffnenden Wandungsteile auf der gleichen Seite der Kabelführung (1) angeordnet sind, wobei jedes Element (2, 3) zur gelenkigen Verbindung mit je zwei benachbarten Elementen (2, 3) gegenüberliegende Löcher (6) und zu diesen passende gegenüberliegende Zapfen (5) aufweist und jeweils ein Element (3) einen mit einem Loch (6) versehenen Deckel (12), der den zu öffnenden Wandungsteil dieses Elementes (3) bildet, und das benachbarte Element (2) einen mit einem Zapfen (5) versehenen Deckel (11), der den zu öffnenden Wandungsteil dieses Elementes (2) bildet, aufweist.

2. Kabelführung nach Anspruch 1, **dadurch gekennzeichnet**, daß die Elemente (2, 3) bis auf ihre Stirnseiten einschließlich der zu öffnenden Wandungsteile im wesentlichen geschlossen ausgebildet sind und sich teilweise überlappen.

3. Kabelführung nach Anspruch 2, **dadurch gekennzeichnet,** deß die Wandungsteile als abnehmbare und aufschnappbare Deckel (11, 12) ausgebildet sind.

4. Kabelführung nach Anspruch 3, **dadurch gekennzeichnet**, daß die Verbindung der Deckel (11, 12) mit den Elementen (2, 3) als Nut- und Federverbindung (13, 14) ausgebildet ist.

5. Kabelführung nach Anspruch 4, **dadurch gekennzeichnet**, daß die Nut- und Federverbindung (13, 14) formschlüssig rastend ausgebildet ist.

## Claims

1. Cable guide consisting of articulated individual components (2, 3) which are open at the front and made of elastomeric plastic, where the articulation axes (7, 8) of the components (2, 3) run transversely to the longitudinal axis of the cable guide (1) and the individual components are linked together, at least in sections, in such a way that the articulation axes (7, 8) of two adjacent components (2, 3) are positioned at 90° to one another, **characterised in that** two different, alternating basic shapes are envisaged for the components (2, 3) in the section concerned, each of which has an openable wall element which extends across the entire length of the component concerned and is positioned in such a way that the openable wall elements of adjacent components (2, 3) with offset articulation axes (7, 8) are located on the same side of the cable guide (1), with each component (2, 3) having opposing holes (6) and matching opposing pins (5) in order to form an articulated connection with two adjacent components (2, 3) and one component (3) having a cover (12), which constitutes the openable wall element of this component (3), provided with a hole (6) and the adjacent component (2) having a cover (11), which constitutes the openable wall element of this component (2), provided with a pin (5).

2. Cable guide as per Claim 1, **characterised in that**, except for their front sides including the openable wall elements, the components (2, 3) are of largely closed design and partially overlap.

3. Cable guide as per Claim 2, **characterised in that** the wall elements are designed as removable, snap-on covers (11, 12).

4. Cable guide as per Claim 3, **characterised in that** the connection of the covers (11, 12) to the components (2, 3) is designed as a tongue-and-groove joint (13, 14).

5. Cable guide as per Claim 4, **characterised in that** the tongue-and-groove joint (13, 14) is designed to snap together positively.

## Revendications

1. Guide-câble se composant d'éléments individuels (2,3) en matière plastique élastomère, ouverts sur leurs côtés frontaux et assemblés de façon articulée, les axes d'articulation (7,8) des éléments (2,3) s'étendant transversalement par rapport à l'axe longitudinal du guide-câble (1) et les éléments individuels étant assemblés, au moins par sections, de sorte que les axes d'articulation (7,8) de deux éléments (2,3) voisins soient décalés de 90° l'un par rapport à l'autre, caractérisé en ce que, dans la section en question, il est prévu en alternance deux formes de base différentes d'éléments (2,3) qui présentent chacune une partie de paroi à ouvrir qui s'étend sur toute la longueur de l'élément en question et est disposée de sorte que, dans des éléments (2,3) voisins dont les axes d'articulation (7,8) sont disposés avec un décalage de 90° l'un par rapport à l'autre, les parties de paroi à ouvrir soient situées du même côté du guide-câble (1), chaque élément (2,3) présentant, pour son assemblage articulé avec deux éléments (2,3) voisins, des trous opposée (6) et des tenons opposés (5) s'adaptant dans ceux-ci, et un élément (3) comportant chaque fois un couvercle (12) qui est muni d'un trou (6) et constitue la partie de paroi à ouvrir de cet élément (3), tandis que l'élément voisin (2) comporte un couvercle (11) qui est muni d'un tenon (5) et constitue la partie de paroi à ouvrir de cet élément (2).

2. Guide-câble selon la revendication 1, caractérisé en ce qu'à l'exception de leurs côtés frontaux, les éléments (2,3) sont réalisées sous forme essentiellement fermée, y compris les parties de paroi à ouvrir, et se recouvrent partiellement.

3. Guide-câble selon la revendication 2, caractérisé en ce que les parties de paroi sont réalisées sous forme de couvercles (11,12) amovibles et encliquetables.

4. Guide-câble selon la revendication 3, caractérisé en ce que l'assemblage entre les couvercles (11,12) et les éléments (2,3) est réalisé sous forme d'assemblage à rainure et à languette (13,14).

5. Guide-câble selon la revendication 4, caractérisé en ce que l'assemblage à rainure et à languette (13,14) est réalisé sous forme d'encliquetage à complémentarité de forme.
